Europäisches Patentamt

(19) European Patent Office

Office européen des brevets

(11) Publication number: 0 118 930
B1

(12) EUROPEAN PATENT SPECIFICATION

(45) Date of publication of patent specification: 20.04.88    (51) Int. Cl.⁴: G 11 B 23/00

(21) Application number: 84200085.3

(22) Date of filing: 23.01.84

(54) Method of manufacturing metal matrices.

(30) Priority: 31.01.83 NL 8300344

(43) Date of publication of application:
19.09.84 Bulletin 84/38

(45) Publication of the grant of the patent:
20.04.88 Bulletin 88/16

(84) Designated Contracting States:
DE FR GB IT NL

(56) References cited:
NL-A-7 601 465
NL-A-7 611 395
US-A-1 358 949
US-A-2 075 646

TOUTE L'ELECTRONIQUE, no. 476, August-
September 1982, page 14, Paris, FR; "Panorama
Vidéodisque: un nouveau procédé de
fabrication"

ELECTRONIC DESIGN, vol. 30, no. 17, August
1982, page 58, Waseca, GB; "Light-sensitive
lacquer makes video disks better"

(73) Proprietor: Polygram B.V.
Gerrit van der Veenlaan 4
NL-3743 DN Baarn (NL)

(72) Inventor: Legierse, Petrus Egidius Jacobus
INT. OCTROOIBUREAU B.V. Prof. Holstlaan 6
NL-5656 AA Eindhoven (NL)
Inventor: Wijdeveld, Petrus Wilhelmus Jozef
c/o INT. OCTROOIBUREAU B.V. Prof. Holstlaan 6
NL-5656 AA Eindhoven (NL)
Inventor: Edelstein, Marcel Jacques
c/o INT. OCTROOIBUREAU B.V. Prof. Holstlaan 6
NL-5656 AA Eindhoven (NL)

(74) Representative: Weening, Cornelis et al
INTERNATIONAAL OCTROOIBUREAU B.V. Prof.
Holstlaan 6
NL-5656 AA Eindhoven (NL)

Courier Press, Leamington Spa, England.

## Description

The invention relates to a method of manufacturing metal dies which are suitable for use in the production of information discs of synthetic resin, in which from a master disc which comprises a supporting plate carrying on one side a layer of synthetic resin in which a spiral-like information track or an information track built up from concentric circles is provided, a first negative copy is made, a positive copy is manufactured from the negative copy and a second negative copy in metal is then manufactured from the positive copy.

The information discs of synthetic resin which are manufactured by means of the metal dies are, for example, gramophone records but in particular discs of synthetic resin having an optically readable information track. Such optical discs are known as Laservision Disc, in case of video (image) information and Compact Disc, in case of audio (sound) information. An optically readable information track has a crenellated profile of informations areas which are situated alternately at a higher level and at a lower level. The areas or bits are read in reflection by means of laser light. The areas have small longitudinal dimensions of, for example, 0.3 to 3 μm. The difference in height between the areas is

$$\frac{n\lambda}{4d},$$

where $d$ is the refractive index, $\lambda$ is the wavelength of the reading laser light, and $n$ is an integer.

In the manufacture of dies for gramophone records, the first negative copy derived from the master disc, the positive copy and the second negative copy all have been manufactured from metal since many years.

In NL—A—76 11 395, Touh l'Electronique No. 476, Aug.—Sept. 1982, page 14, and Electronic Design, Vol. 30, No. 17, Aug. 1982, page 58 is disclosed that also in the manufacture of dies for optical discs all the copies derived from the master disc are manufactured from metal. Metal copies are expensive. The manufacture of metal copies is time consuming. Another important disadvantage is that only a limited number of further metal copies can be made from a metal original. Starting from the master disc, one first negative metal copy, mostly termed father disc, can be manufactured of which a limited number of positive copies in metal, for example 7 positive copies, can be manufactured. Again 7 negative copies in metal can be manufactured from each positive copy. So totally 49 dies are obtained.

A method of manufacturing a metal matrix having video information also is disclosed in the US—A—4,211,617, with reference to US—A—4,130,620. According to this method a negative copy of silicon rubber is made from the master disc. For this purpose the master disc is provided with the release agent polyvinyl alcohol and then with a liquid mixture of a silicone rubber and a catalyst. A glass plate comprising a bonding agent is pressed against the liquid mixture of silicone rubber. The rubber is cured under pressure at an elevated temperature. Finally the glass plate and the attached layer of cured silicone rubber, in which the information track of the master disc is copied, is removed from the master disc. A positive copy is manufactured from the obtained negative copy by providing the silicone rubber matrix with a liquid mixture of a polyurethane resin, a thinner and a catalyst. A supporting foil of polyester is placed on said mixture. The resin subsequently is cured and the supporting foil with the cured resin layer is removed from the silicone rubber matrix. The resulting positive copy is silver-plated on the side of the information track. The silver-plated copy serves as a starting material for the manufacture of a negative "mother" matrix of metal from which positive metal copies can be made by electroplating. Herefrom again negative metal copies are manufactured which may be used as dies in the manufacture of synthetic resin replicas (US—A—4,211,617, column 6, line 46 to column 7, line 43). This known method is very cumbersome and rather expensive. The disadvantage of the method is that as a result of the temperature and pressure treatment, tensions will be built up in the silicone rubber matrix and the polurethane copies derived therefrom. Upon release of the tensions, deformations are likely to occur whereby the quality of the stored information is reduced resulting into a high reject percentage.

The invention provides a method which mitigates the above-mentioned problems. According to the invention the first negative copy and/or the positive copy are manufactured from a light-cured composition. This concept leads to the following process variants:

a) a method of manufacturing metal dies which are suitable for use in the production of information discs of synthetic resin, in which from a master disc which comprises a supporting plate which on one side has a layer of synthetic resin in which a spiral-like information track or an information track built up from concentric circles is provided, a first negative copy is made, a positive copy of metal is manufactured from the negative copy and a second negative copy of metal is then made from the positive copy, characterized in that the first negative copy is manufactured by providing the master disc on the side of the information track with a layer of a liquid, light-curable composition and curing said layer with light,

b) a method of manufacturing metal dies which are suitable for use in the production of information discs of synthetic resin, in which from a master disc which comprises a supporting plate which on one side has a layer of synthetic resin in which a spiral-like information track or an information track built up from concentric circles is provided, a first negative copy is made, a positive copy of metal is manufactured from the negative copy and a second negative copy of metal is then made from the positive copy, characterized in that the positive copy is obtained by providing the first negative copy on the side of the information track as copied from the master disc, with a layer of a liquid, light-curable composition and then curing the said layer,

c) a method of manufacturing metal dies which are suitable for use in the production of information discs of synthetic resin, in which from a master disc which comprises a supporting plate which on one side has a layer of synthetic resin in which a spiral-like information track or an information track built up from concentric circles is provided, a first negative copy is made, a positive copy of metal is manufactured from the negative copy and a second negative copy of metal is then made from the positive copy, characterized in that both the first negative copy and the positive copy are manufactured by using a layer of a liquid, light-curable composition and curing said layer.

By using the method according to the invention, metal dies can be manufactured in a cheap and rapid manner. Moreover, the invention provides the possibility of manufacturing a large number of metal dies, for example a few thousand dies, from one master disc. All dies manufactured according to the invention show an excellent quality in which the information track is a very accurate copy of that of the master disc.

The light-curable composition used in the method in accordance with the invention is, for example, a mixture of light-curable, for example UV light-curable, acrylic acid esters (acrylates), particularly mono-, di-, tri-, or tetra-esters of acrylic acid. Light-curable polyenethiol compounds may also be used. Suitable compounds and mixtures of compounds are described in NL—A—76 11 395, NL—A—79 04 113, NL—A—80 05 674 and NL—A—78 04 036 all in the name of N.V. Philips' Gloeilampenfabrieken.

In a favourable embodiment of the method in accordance with the invention a transparent supporting plate is placed on the layer of the liquid, light-curable composition, the layer is then cured by exposure to light *via* the transparent supporting plate and the resulting copy which comprises the supporting plate and the cured layer bonded thereto in which the information track is copied, is removed from the original.

In a further favourable embodiment the supporting plate is manufactured from glass and is provided with a bonding agent. An attractive bonding agent is a silane compound, in particular a silane compound having an unsaturated organic radical, such as γ-methacryloxypropyltrimethoxy-silane. As a result of the exposure to light, said silane compound is polymerized together with the light curable composition. Herewith the advantage is obtained that the resulting copy does not comprise low molecular substances which otherwise might present problems as a result of migration to the surface. Furthermore, a very rigid bonding between the glass plate and the cured composition is obtained.

Still another favourable embodiment of the method in accordance with the invention is characterized in that upon making a copy while using the light-curable composition, in case the surface from which the copy is made consists of a synthetic resin, the surface of synthetic resin is first provided with a separation layer. In the process described hereabove under *a* the master disc is preferably first provided with a separation layer on the side of the information track. A suitable separation layer is a metal layer, for example, an electroless deposited silver layer.

The master disc with an optically readable information track mostly comprises a flat, ground glass plate carrying one one side a layer of a photoresist, usually a positive photoresist, for example the photoresist known by the tradename of Shipley. An information track has been provided in the photoresist layer by means of an imagewise exposure to, for example, modulated laser light.

The master disc for gramophone records mostly comprises an aluminium supporting plate which one one side is provided with a lacquer, for example an acetate lacquer, in which the information track has been cut mechanically. The supporting plate may also be provided with a light curable lacquer, such as a lacquer based upon acrylic acid esters (acrylates). The lacquer is cured partly in such manner that the hardness of the lacquer is optimum to cut a track. After having provided the track the lacquer is post-cured by means of for example UV-light.

As said above, in the process variant *a*, the master disc preferably is provided on the side of the layer of synthetic resin such as a photoresist layer or lacquer layer, with a metal layer applied by means of an electroless metalization process. Known processes for this purpose are vapour deposition process, sputtering process and chemical deposition process. According to the last-mentioned process the surface of synthetic resin is treated simultaneously or successively with a metal salt solution, for example an ammonical silver nitrate solution, and a solution of reduction agent, for example a solution of formaldehyde or glucose.

On the metal layer, a layer of the liquid light-curable composition is applied and a transparent supporting plate is provided hereon. A useful supporting plate is, for example, a plate manufactured from a transparent synthetic resin, for example, polymethylmethacrylate, polysulphone or polycarbonate. A glass supporting plate is preferred which, as compared with a plate of synthetic resin, shows a better form stability and is impervious to moisture.

The layer of the light curable composition is cured by exposure *via* the supporting plate. The supporting plate with the cured layer bonded thereto is removed from the master disc. The electroless metal layer may come off with the negative copy. A positive copy of metal is manufactured from the negative copy by growing a metal peel, in particular an Ni-peel, on the electroless deposited metal layer by means of an electro- plating process (electrolytically). The metal peel together with the electroless metal layer is separate from the negative copy. The obtained positive copy preferably consists of a nickel peel carrying a silver layer on the side of the copied information track. Finally, the desired dies of metal are manufactured from the positive copy. For this purpose, usually the electroless metal layer, such as an Ag-layer, is first removed from the positive copy by treatment with an aqueous ammonical solution of an oxidation agent, for example $H_2O_2$. Subsequently the metal surface, usually an Ni-surface, is passivated by treatment with an oxidation agent and a metal peel of, for example, Ni is grown hereon by means of an electro-plating process. Due to the passivation the grown metal peel can easily be removed from the positive copy and herewith the desired die is obtained.

According to the process variant b a first negative copy of metal is manufactured from the master disc. For this purpose, the master disc on the side of the layer of synthetic resin is provided with an electroless metal layer, for example, an Ag-layer. On the electroless deposited metal layer, a metal peel, for example an Ni-peel is grown by electroplating. The metal peel with the electroless metal layer is removed from the master disc. On the electroless metal layer of the thus obtained first negative copy a layer of a liquid, light-curable composition is provided. The layer is covered with a transparent supporting plate, then cured via the supporting plate and finally the assembly of the supporting plate and cured layer bonded thereto is removed from the first negative copy. The information track is copied in the cured layer of the resulting positive copy. The cured layer is provided with an electroless deposited metal layer, for example an Ag-layer. A metal peel, for example an Ni-peel, is provided hereon by electroplating. The Ni-peel with the Ag-layer bonded thereto is removed from the positive copy and finally the silver layer is removed selectively by treatment with an oxidation agent. The resulting metal die is suitable for the manufacture of replicas of synthetic resin.

The variant b of the process is a particularly interesting method because a large number of, for example, 1000 positive copies can be made from the first negative copy and each in turn provide one or more dies.

According to variant c of the process, both the first negative copy and the positive copy derived herefrom are manufactured by using the liquid, light-curable composition. The first negative copy of the master disc is manufactured in the same manner as described hereabove for variant a of the process. The first negative copy comprises a transparent supporting plate and a light-cured layer bonded thereto in which the information track of the master disc is copied and which is covered with an electroless deposited metal layer. Said metal layer is provided with a layer of the liquid, light-curable composition and covered with a transparent supporting plate. The layer of the light curable composition is cured by exposure via the supporting plate and the supporting plate together with the cured layer bonded thereto is removed from the first negative copy. The above-mentioned electroless metal layer preferably remains bonded to the first negative copy so that the negative copy can be used many times to make positive copies. The resulting positive copy on the side of the cured layer in which in the information track is copied is provided with a metal layer applied by an electroless deposition process and thereafter by a metal peel grown electrolytically upon the electroless metal layer. The metal peel is removed and further processed to a die in the same manner as described for variant b of the process.

If very large numbers of information discs of synthetic resin are to be manufactured and the number of dies is insufficient, in a further embodiment of the method in accordance with the invention positive sub-dies can be manufactured from the metal dies by using the light-curable liquid composition and a transparent supporting plate in the manner described above. Of these sub-dies of synthetic resin negative metal copies are made by metallizing the sub-dies first by electroless deposition and subsequently by electroplating.

The invention will now be described in greater detail with reference to the following embodiments and the drawing, in which

Figures 1, 2 and 3 are cross-sectional views of copies manufactured in carrying out variant b of the process according to the invention,

Figures 4, 5 and 6 are cross-sectional views of copies manufactured in carrying out variant a of the process, and

Figures 7 and 8 are cross-sectional views of copies manufactured in carrying out variant c of the process according to the invention.

Example 1

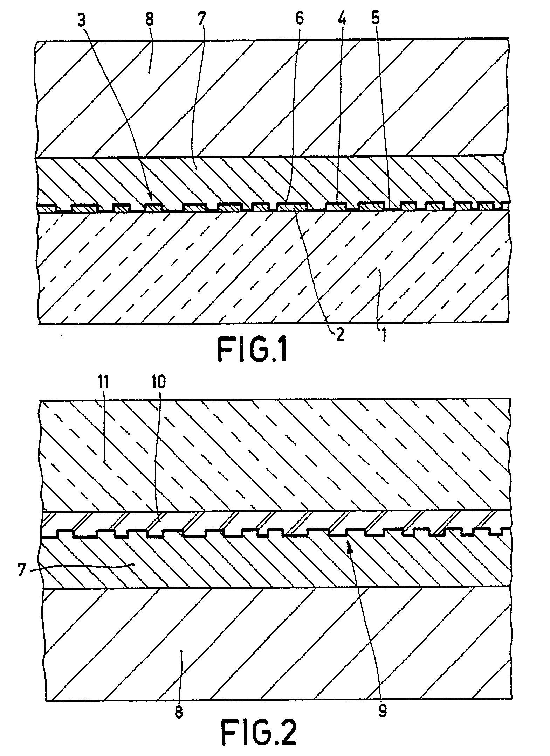

A master disc comprises a flat ground glass supporting plate 1 which on one side comprises a layer of photoresist 2 in which an optically readable information track 3 is provided by means of modulated laser light. Information track 3 has a crenellated profile of information areas 4 situated at a higher level and information areas 5 situated at a lower level. The layer of photoresist is coated with a vapour-deposited layer 6 of Ag. Layer 6 is connected to the cathode of an electroplating bath which comprises an aqueous solution of nickel sulphamate. When current passes through, an Ni-peel 7 is deposited on layer 6. Said peel 7 is provided with a rigid metal disc 8 on the surface remote from the silver layer 6. After removing the master disc 1, 2 a first negative copy in metal is obtained, the information track 9 of which (see Figure 2) is a negative of the information track 2 present in the master disc.

The next step of the process is shown in Figure 2 in which the same reference numerals are used for the same components as in Figure 1. A light-curable composition which comprises the following constituents:

20% by weight of trimethylolpropanetriacrylate
20% by weight of 1,4 butanedioldiacrylate
58% by weight of ethylhexylacrylate
2% by weight of catalyst (bezoin-isobutylether) is provided on the metal copy 7, 8 on the side of the information track 9.

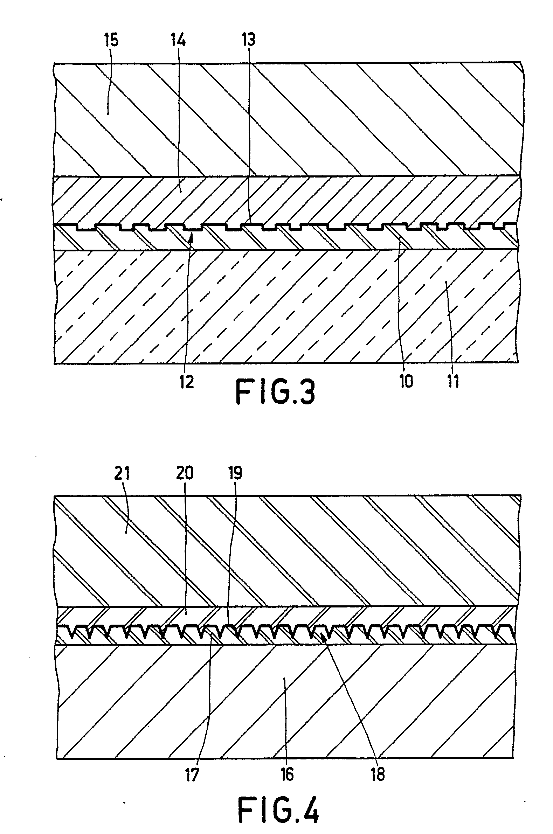

A glass plate 11 is placed on the layer 10 thus obtained. Glass plate 11 is provided with the bonding agent γ-methacryloxypropyltrimethoxy-silane on the surface which is in contact with layer 10. The layer 10 of the light curable composition is cured by exposure to UV-light via the glass plate 11. Glass plate 11 and the cured layer 10 bonded thereto is removed from the negative copy 7, 8. The cured layer 10 comprises an information track 12 (Figure 3) which forms a negative of the information track 9 and is identical to information track 2. The resulting positive copy is provided with an electroless deposited Ag-layer 13 on the side of the information track 12.

The next process step is shown in Figure 3 in which the same reference numerals are used as in Figure 2.

Ag-layer 13 is connected to the cathode of an electroplating bath which comprises an aqueous solution of nickel sulphamate. When current passes, an Ni-peel 14 is deposited. A rigid metal plate 15, for example an aluminium plate, is bonded to peel 14 and the resulting copy 14, 15 is removed from the positive copy 10, 11. Die 14, 15 has an optically readable information track which is a negative of that of the master disc. The desired information discs of synthetic resin can be manufactured by means of the die by using the conventional processes, such as a compression process, an injection moulding process or the process known from Netherlands Patent Application 76 11 395 (PHM 8576). The die 14, 15 may be used both with and without an Ag-layer 13. It is recommendable to remove the Ag-layer 13 by alkaline oxidation so that the harder Ni-surface can be used for the multiplication of information discs of synthetic resin. If desired, a sub-die of synthetic resin can be manufactured from die 14, 15 by using a liquid, light-curable composition and a transparent supporting plate as described hereinbefore. The resulting sub-die comprises a supporting plate of, for example, glass or of a transparent synthetic resin, for example, polymethylmethacrylate and a cured layer of a synthetic resin which is bonded thereto and has been obtained by exposing the light curable composition to light. From the positive sub-die a second negative die is manufactured by metallization and bonding a rigid metal plate.

Example 2

A master disc destined for gramophone records comprises an aluminium supporting plate 16 (Figure 4) which on one side has an acetate lacquer 17 in which a spiral-like information track 18 has been cut. The free surface of the layer of acetate lacquer is covered with an electroless deposited layer 19 of Ag. A liquid light-curable composition 20 is provided on layer 19, comprising the following constituents:

10% by weight of trimethylolpropanetriacrylate
57% by weight of tripropyleneglycoldiacrylate
29% by weight of N-vinylpyrrolidone
4% by weight of catalyst (benzildimethylketal)

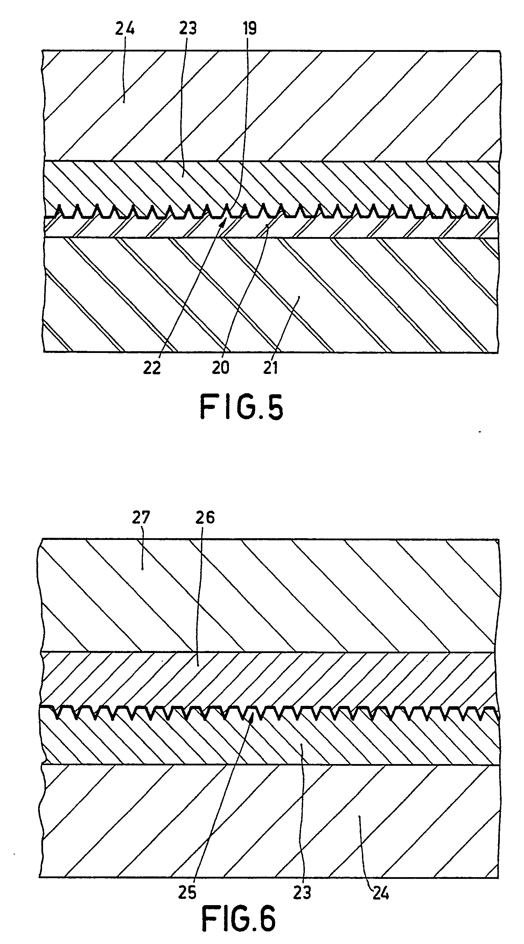

A supporting plate 21 of polymethylmethacrylate is provided on the lacquer layer 20. The lacquer layer 20 is cured by exposure to UV-light which is irradiated via the supporting plate 21. The master disc 16, 17 is removed, the Ag-layer 19 remaining bonded to the cured layer 20. The resulting negative copy 19, 20, 21 comprises an information track 22 (Figure 5) which is the negative of information track 18 of the master disc. The process is further carried out as shown in Figure 5 in which the same reference numerals are used for the same components as in Figure 4.

An Ni-peel 23 is grown on Ag-layer 19 by an electroplating process. A rigid metal plate 24 is bonded to peel 23. The negative copy 20, 21 is removed, the silver layer 19 remaining bonded to the metal layer 23. The resulting positive copy 19, 23, 24 comprises an information track 25 (Figure 6) which is identical to information track 18. The silver layer is then removed by treatment with an oxidation agent in an alkaline reaction medium. The released Ni-surface is passivated, also by a treatment with an aqueous, alkaline solution of an oxidation agent.

An Ni-peel 26 is grown by an electroplating process on the positive copy 23, 24 on the side of the information track 25. The peel is provided with a rigid metal plate 27. After removing the positive copy 23, 24 a metal die 26, 27 is obtained. The information track of the die is the negative replica of the information track 18 of the master disc. The usual gramophone records of synthetic resin can be manufactured by means of the die 26, 27, for example, by using a compression process.

Example 3

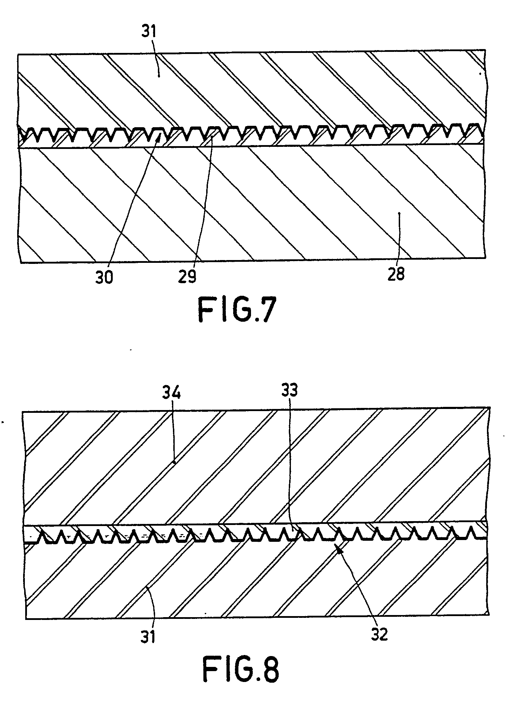

A master disc for gramophone records comprises an aluminium supporting plate 28 which on one side has an acetate lacquer 29 with information track 30 (Figure 7). A layer 31 of a light-curable composition is provided directly on the acetate lacquer 29 and comprises the following constituents:

96.75% by weight of 1,1'-isopropylenebis (p-phenoxyethylmethacrylate)
0.25% by weight of isopropylbenzoinether (initiator)
3% by weight of amino-acrylate (sensitizer).

Layer 31 is cured by exposure to UV-light. The master disc 28, 29 is removed and the resulting negative copy 31 comprises an information track 32 (Figure 8) which is the negative of the information track 30.

The negative copy 31 is provided on the side of information track 32 with a layer 33 of a light-curable lacquer (composition) with the following ingredients:

17% by weight of trimethylolpropanetriacrylate
62% by weight of tripolyleneglycoldiacrylate
17% by weight of N-vinylpyrrolidone
4% by weight of benzildimethylketal.

If desired, copy 31 may first be provided with a separation layer of metal and then be provided with the layer 33.

A transparent supporting plate 34 of polymethylmethacrylate is placed on layer 33. the layer 33 is cured by exposure *via* the supporting plate 34 and the resulting positive copy 33, 34 in which the information track is copied is removed from the negative copy 31. The positive copy is metallized on the side of the information track first by an electroless process and then by electroplating. A rigid metal plate is applied and the negative copy of metal (die) thus manufactured is removed from the positive copy in the same manner as described with reference to Figure 5. Gramophone records of synthetic resin can be manufactured by means of the die in the usual manner.

## Claims

1. A method of manufacturing metal dies which are suitable for use in the production of information discs of synthetic resin, in which from a master disc which comprises a supporting plate which on one side has a layer of synthetic resin in which a spiral-like information track or an information track built up from concentric circles is provided, a first negative copy is made, a positive copy of metal is manufactured from the negative copy and a second negative copy of metal is then made from the positive copy, characterized in that the first negative copy is manufactured by providing the master disc on the side of the information track with a layer of a liquid, light-curable composition and curing said layer with light.

2. A method of manufacturing metal dies which are suitable for use in the production of information discs of synthetic resin, in which from a master disc which comprises a supporting plate which on one side has a layer of synthetic resin in which a spiral-like information track or an information track built up from concentric circles is provided, a first negative copy of metal is made, a positive copy is manufactured from the negative copy and a second negative copy of metal is then made from the positive copy, characterized in that the positive copy is obtained by providing the first negative copy on the side of the information track as copied from the master disc, with a layer of a liquid, light-curable composition and then curing the said layer.

3. A method of manufacturing metal dies which are suitable for use in the production of information discs of synthetic resin, in which from a master disc which comprises a supporting plate which on one side has a layer of synthetic resin in which a spiral-like information track or an information track built up from concentric circles is provided, a first negative copy is made, a positive copy of metal is manufactured from the negative copy and a second negative copy of metal is then made from the positive copy, characterized in that both the first negative copy and the positive copy are manufactured by using a layer of a liquid, light-curable composition and curing said layer.

4. A method as claimed in Claim 1, 2 or 3, characterized in that a transparent supporting plate is placed on the layer of the liquid, light-curable composition, the layer is cured by exposure *via* the transparent supporting plate and the assembly of supporting plate and the cured layer bonded thereto in which the information track is copied, is removed from the original.

5. A method as claimed in Claim 4, characterized in that the supporting plate is a glass plate which comprises a bonding agent on the side facing the layer of the light curable composition.

6. A method as claimed in Claim 1 or 3, characterized in that prior to the application of the layer of a liquid, light-curable composition, the surface to be copied firstly is provided with a separation layer.

## Patentansprüche

1. Verfahren zum Herstellen von Metallmatrizen, die zum Herstellen von Kunststoffinformationsscheiben benutzt werden können, wobei von einer Mutterplatte ausgegangen wird, die eine Trägerplatte enthält, die auf einer Seite mit eine Kunststoffschicht versehen ist, in der eine spiralförmige oder eine aus konzentrischen Kreisen aufgebaute Informationsspur vorgesehen ist, davon ein erster negativer Abdruck hergestellt wird, von dem negativen Abdruck ein positiver Abdruck in Metall hergestellt und daraufhin von dem positiven Abdruck ein zweiter negativer Abdruck in Metall gemacht wird, dadurch gekennzeichnet, dass der erste negative Abdruck dadurch hergestellt wird, dass die Mutterplatte auf der Seite der Informationsspur.

2. Verfahren zum Herstellen von Metallmatrizen, die zum Herstellen von Kunststoffinformationsscheiben benutzt werden können, wobei von einer Mutterplatte ausgegangen wird, die eine Trägerplatte enthält, die auf einer Seite mit einer Kunststoffschicht versehen ist, in der eine spiralförmige oder eine aus konzentrischen Kreisen aufgebaute Informationsspur vorgesehen ist, davon ein erster negativer Abdruck hergestellt wird, von dem negativen Abdruck ein positiver Abdruck ein zweiter negativer Abdruck in Metall gemacht wird, dadurch gekennzeichnet, dass der positive Abdruck dadurch erhalten wird, dass der erste negative Abdruck auf der Seite der von der Mutterplatte kopierten Informationsspur mit einer Schicht einer flüssigen, lichthärtenden Zusammensetzung versehen ist und dass diese Schicht daraufhin mit Licht gehärtet wird.

3. Verfahren zum Herstellen von Metallmatrizen, die zum Herstellen von Kunststoffinformationsscheiben benutzt werden können, wobei von einer Mutterplatte ausgegangen wird, die eine Trägerplatte enthält, die auf einer Seite mit einer Kunststoffschicht versehen ist, in der eine spiralförmige oder eine aus konzentrischen Kreisen aufgebaute Informationsspur vorgesehen ist, davon ein erster negativer Abdruck hergestellt wird, von dem negativen Abdruck ein positiver Abdruck in Metall hergestellt und daraufhin von dem positiven Abdruck ein zweiter negativer Abdruck in Metall gemacht wird, dadurch gekennzeichnet, dass der erste negative Abdruck sowie der positive Abdruck durch Verwendung einer Schicht einer flüssigen lichtärtenden Zusammensetzung hergestellt und diese Schicht mit Licht gehärtet wird.

4. Verfahren nach Anspruch 1, 2 oder 3, dadurch gekennzeichnet, dass auf der Schicht der flüssigen, lichthärtenden Zusammensetzung eine transparente Trägerplatte angebracht wird, die Schicht durch Belichtung durch die transparente Trägerplatte hindurch gehärtet wird und das Gefüge aus Trägerplatte und der damit verbundenen gehärteten Schicht, worin die Informationsspur kopiert ist, von dem Original entfernt wird.

5. Verfahren nach Anspruch 4, dadurch gekennzeichnet, dass die Trägerplatte eine Glasplatte ist, die auf der der Schicht der lichthärtenden Zusammensetzung zugewandten Seite mit einem Haftmittel versehen ist.

6. Verfahren nach Anspruch 1 oder 3, dadurch gekennzeichnet, dass vor dem Anbringen der Schicht einer flüssigen, lichthärtenden Zusammensetzung die zu kopierende Oberfläche zunächst mit einer Trennschicht versehen wird.

**Revendications**

1. Procédé pour la réalisation de matrices métalliques qui peuvent être utilisées pour la réalisation de disques d'information en matière synthétique, selon lequel on part d'un disque maître comportant une plaque de support dont une face est munie d'une couche en matière synthétique dans laquelle est formée une piste d'information spiralée ou une piste composée de cercles concentriques, dont une première copie négative est réalisée, une copie positive est réalisée à partir de la copie négative et une deuxième copie négative métallique est réalisée à partir de la copie positive, caractérisé en ce que la première copie négative est réalisée par application, sur le disque maître, du côté de la piste d'information, d'une couche en une composition liquide, durcissant à l'aide de lumière suivie d'un durcissement de ladite couche à l'aide de la lumière.

2. Procédé pour la réalisation de matrices métalliques qui peuvent être utilisées pour la réalisation de disques d'information en matière synthétique, selon lequel on part d'un disque maître comportant une plaque de support dont une face est munie d'une couche en matière synthétique dans laquelle est formée une piste d'information spiralée ou une piste composée de cercles concentriques, une première copie négative est réalisée, une copie positive est réalisée à partir de la copie négative et une deuxième copie négative métallique est réalisée à partir de la copie positive, caractérisé en ce que la copie positive est obtenue par application, sur la première copie négative, du côté de la piste d'information transmise à partir du disque maître, d'une couche en une composition liquide durcissant à l'aide de lumière, suivie d'un durcissement de la ladite couche.

3. Procédé pour la réalisation de matrices métalliques qui peuvent être utilisées pour la réalisation de disques d'information en matière synthétique, selon lequel on part d'un disque maître comportant une plaque de support dont une face est munie d'une couche en matière synthétique dans laquelle est formée une piste d'information spiralée ou une piste composée de cercles concentriques, une première copie négative est réalisée, une copie positive est réalisée à partir de la copie négative et une deuxième copie négative métallique est réalisée à partir de la copie positive, caractérisé en ce que tant la première copie négative que la copie positive sont réalisées par utilisation d'une couche d'une composition liquide durcissant à l'aide de lumière et durcissement de ladite couche.

4. Procédé selon la revendication 1, 2 ou 3, caractérisé en ce qu'une plaque de support transparente est placée sur la couche de la composition liquide durcissant à l'aide de lumière, la couche est alors durcie par exposition à de la lumière par l'intermédiaire de la plaque de support transparente et l'ensemble de la plaque de support et de la couche durcie y reliée à laquelle est transmise la piste d'information, est enlevée de l'original.

5. Procédé selon la revendication 4, caractérisé en ce que la plaque de support est une plaque en verre contenant un adhésif du côté situé vi-à-vis de la couche de la composition durcissant à l'aide de lumière.

6. Procédé selon la revendication 1 ou 3, caractérisé en ce qu'avant l'application de la couche en une composition liquide durcissant à l'aide de lumière, la surface à copier est d'abord munie d'une couche de séparation.

0 118 930

FIG.1

FIG.2

FIG.3

FIG.4

24 23 19

22 20 21

# FIG.5

27 26

25 23 24

# FIG.6

FIG.7

FIG.8